(19) Europäisches Patentamt
European Patent Office
Office européen des brevets

(11) **EP 2 555 282 A1**

(12) **EUROPEAN PATENT APPLICATION**
published in accordance with Art. 153(4) EPC

(43) Date of publication:
**06.02.2013 Bulletin 2013/06**

(51) Int Cl.:
**H01M 4/04** *(2006.01)*        **B26D 7/01** *(2006.01)*
**B26F 1/40** *(2006.01)*        **H01M 4/139** *(2010.01)*

(21) Application number: **11759518.1**

(22) Date of filing: **24.03.2011**

(86) International application number:
**PCT/JP2011/057193**

(87) International publication number:
**WO 2011/118713 (29.09.2011 Gazette 2011/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2010   JP 2010073168**

(71) Applicant: **Mitsubishi Heavy Industries, Ltd.
Tokyo 108-8215 (JP)**

(72) Inventor: **UEDA Hisashi
Tokyo 108-8215 (JP)**

(74) Representative: **HOFFMANN EITLE
Patent- und Rechtsanwälte
Arabellastrasse 4
81925 München (DE)**

(54) **ELECTRODE PLATE MANUFACTURING APPARATUS**

(57)     An electrode plate die-cutting apparatus of the present invention includes an original plate support portion 3 that supports an original plate of an electrode plate on a support surface 35, a driving portion that drives a cutting blade, which is arranged with a blade edge facing the original plate support portion 3, to move forward or backward, and a pressure adjusting portion 7 that suctions the original plate on the support surface 35 when the cutting blade is moving toward the original plate support portion 3 by the driving portion. For example, the pressure adjusting portion 7 includes a pipe 71, a first branch pipe 72, a first valve 75, and a decompressing portion 74. The vicinity of the support surface 35 is suctioned, and thus the electrode plate is adsorbed onto and fixed to the support surface 35 through a through hole 94 disposed in a sheet 90.

FIG. 6

EP 2 555 282 A1

**Description**

[Technical Field]

The present invention relates to an electrode plate manufacturing apparatus.
This application claims priority to and the benefits of Japanese Patent Application No. 2010-073168 filed on March 26, 2010, the disclosure of which is incorporated herein by reference.

[Background Art]

Conventionally, battery cells have been used as power sources of various electrical devices. A secondary battery, which is rechargeable battery, may be used as a power buffer of a power generating device or the like as well as a power source. As a example of the battery cell, there is a configuration having a lamination body in which positive electrode plates and negative electrode plates are laminated with separators interposed between them. In an electrode plate (a positive electrode plate or a negative electrode plate), a surface of a current collecting material may be coated with an electrode active material. A method of manufacturing an electrode plate is disclosed in Patent Document 1.
In Patent Document 1, after forming an original plate of an electrode plate by coating a surface of a base material of a current collecting material with an electrode active material, the original plate is die-cut using a cutting die (i.e., a Thomson die), so that the electrode plate is manufactured. The cutting die includes a cutting blade (i.e., a Thomson cutter), a pressing plate disposed in a portion surrounded by the cutting blade, and a spring that biases the pressing plate toward a support. In the pressing plate, a pressing surface protrudes toward a support side further than the cutting blade.
When the cutting die presses the original plate supported by the support, first, the pressing plate comes in contact with the original plate and presses the original plate against the support. When the cutting die presses more, the cutting blade protrudes to the support side further than the pressing plate, so that the original plate is cut. Since cutting is performed in a state in which the original plate is pressed, displacement of a cutting portion caused as an end surface of the cutting portion follows the side surface of the cutting blade is reduced, and the occurrence of burrs or separation of the electrode active material caused by displacement of the cutting portion is reduced.

[Prior Art Document]

[Patent Document]

Patent Document 1: Japanese Patent Application, First Publication No. 2003-317709

[Disclosure of the Invention]

[Problems to be Solved by the Invention]

In the technique disclosed in Patent Document 1, as will be described later, the original plate may be intensively compressed near the cutting portion, and the electrode active material may be exfoliated and separated from the current collecting material at an edge portion of the electrode plate.
The cutting blade has a finite plate thickness, and the plate thickness increases away from the blade edge. As the cutting blade penetrates the original plate, the cutting portion can be expanded in a plate thickness direction of the cutting blade, that is, a direction parallel to a main surface of the original plate, and the original plate is compressed in the direction parallel to the main surface at the edge portion of the cutting portion.
Since the vicinity of the cutting portion is pressed by the pressing member, a displaceable range at the edge portion of the cutting portion is restricted to the vicinity of the cutting portion, and the original plate is intensively compressed in the vicinity of the cutting portion. When the original plate is intensively compressed, since the electrode active material is different in material from the current collecting material, deformation of the electrode active material is difficult to follow deformation of the current collecting material. In this case, an adhesion force between the electrode active material and the current collecting material is lowered, and thus the electrode active material is exfoliated and separated from the current collecting material in the process of die-cutting or after die-cutting.
The present invention is made in light of the above problems, and it is an object of the present invention to provide an electrode plate manufacturing apparatus which performs die-cutting (punching) of an electrode plate in which exfoliation or separation of an electrode active material hardly occurs.

[Means for Solving the Problems]

In order to achieve the above object, an electrode plate manufacturing apparatus according to an aspect of the present invention employs the following means.

An electrode plate manufacturing apparatus includes an original plate support portion that having a support surface which supports an original plate of an electrode plate, a driving portion that drives a cutting blade, which is arranged with a blade edge facing the original plate support portion, to move forward or backward, and a pressure adjusting portion that suctions the original plate on the support surface when the cutting blade is moved toward the original plate support portion by the driving portion.

In this electrode plate manufacturing apparatus, when the cutting blade moves toward the original plate support portion in a state in which the original plate is arranged on the original plate support portion, the blade edge comes in contact with the original plate, and the electrode plate is die-cut from the original plate. When the cutting blade has moved toward the original plate support portion, the vicinity of the support surface is suctioned, and the original plate is fixed to the original plate support portion side. Since the original plate is fixed to the original plate support portion, positional deviation of the original plate with respect to the cutting blade is prevented, and when the cutting blade retreats from the original plate, the die-cut electrode plate is prevented from moving together with the cutting blade,

Since the vicinity of the support surface of an area that does not overlap the cutting blade is suctioned, the original plate of the portion apart from the position at which the blade edge comes in contact with the original plate is fixed. In the original plate, an intermediate portion between the fixed portion and the portion coming in contact with the blade edge is allowed to deform and deformed by bending toward the original plate support portion by a shear force. In the deformed portion, that is, the end portion of the cutting portion, a normal direction of the interface between the current collecting material and the electrode active material intersects with the surface coming in contact with the cutting blade (i.e., the cutting surface). Thus, a force expanding the cutting portion by the cutting blade has a component force in the normal direction of the interface, and the component force acts to cause the current collecting material to adhere to the electrode active material. Thus, exfoliation of the electrode active material from the current collecting material is reduced, and separation of the electrode active material from the current collecting material is reduced.

Since the original plate is suctioned and fixed to the original plate support portion side, the need to press the original plate against the original plate support portion side is reduced. By simplifying or omitting the pressing member, for example, the maintenance frequency of the pressing member can be reduced. Further, it is possible to prevent a foreign substance from being generated when a part of the pressing member is separated and adheres to the electrode plate.

[Effects of the Invention]

According to the electrode plate manufacturing apparatus of the present invention, it is possible to perform die-cutting (e.g., punching) of an electrode plate in which exfoliation or separation of an electrode active material hardly occurs.

[Brief Description of the Drawings]

FIG. 1 is a perspective view illustrating a configuration example of a battery cell.

FIG. 2A is a plan view illustrating an electrode plate, and FIG. 2B is a cross-sectional view taken along line A-A' of FIG. 2A.

FIG. 3 is a flowchart schematically illustrating a method of manufacturing a battery cell.

FIG. 4 is a perspective view illustrating a schematic configuration of an electrode plate die-cutting apparatus according to a first embodiment.

FIG. 5 is an exploded perspective view illustrating a cutting die and a driving portion which are viewed upward.

FIG. 6 is an exploded perspective view illustrating an original plate support portion and a sheet which are viewed downward.

FIG. 7 is a plan view illustrating a positional relation between various components when a support surface is viewed in a plan view.

FIG. 8 is a cross-sectional view taken along line B-B' of FIG. 7.

FIG. 9 is a timing chart illustrating an operation example of the electrode plate die-cutting apparatus according to the first embodiment.

FIG. 10 is an explanatory diagram illustrating a force acting on the vicinity of a cutting portion.

FIG. 11 is a perspective view illustrating a schematic configuration of an electrode plate die-cutting apparatus according to a second embodiment.

[Mode(s) for Carrying out the Invention]

Hereinafter, exemplary embodiments of the present invention will be described with reference to the accompanying drawings. In the drawings used for description, in order to illustrate characteristic portions in an easily understood manner, a dimension or a reduced scale of a structure in the drawing may be different from that of an actual structure. In the present embodiment, like reference numerals denote like parts, and thus a detailed description thereof may be omitted. The technical scope of the present invention is not limited to the following embodiments, and various modifications can be made in a range not departing from the gist of the present invention. A combination of all components described in embodiments is not necessarily indispensable to the present invention.

Before describing an electrode plate die-cutting apparatus according to the present invention, a description will be first made in connection with a configuration example of a battery cell.

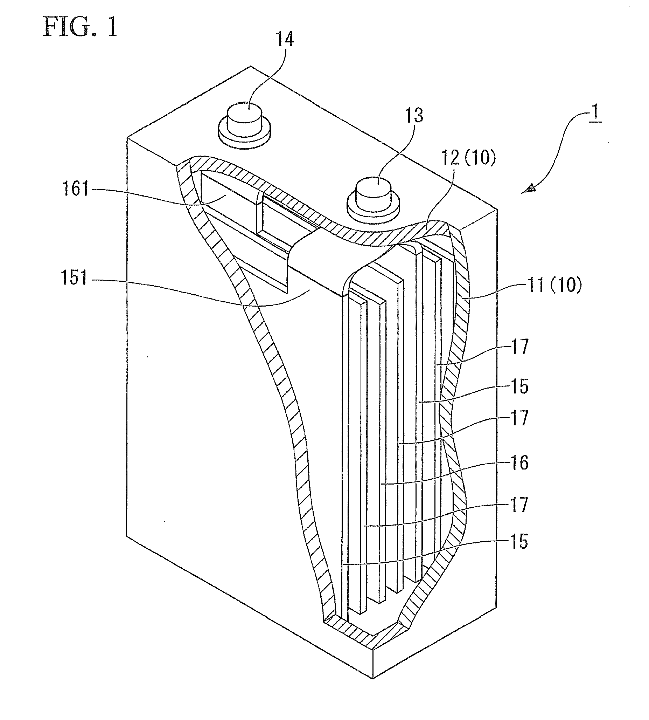

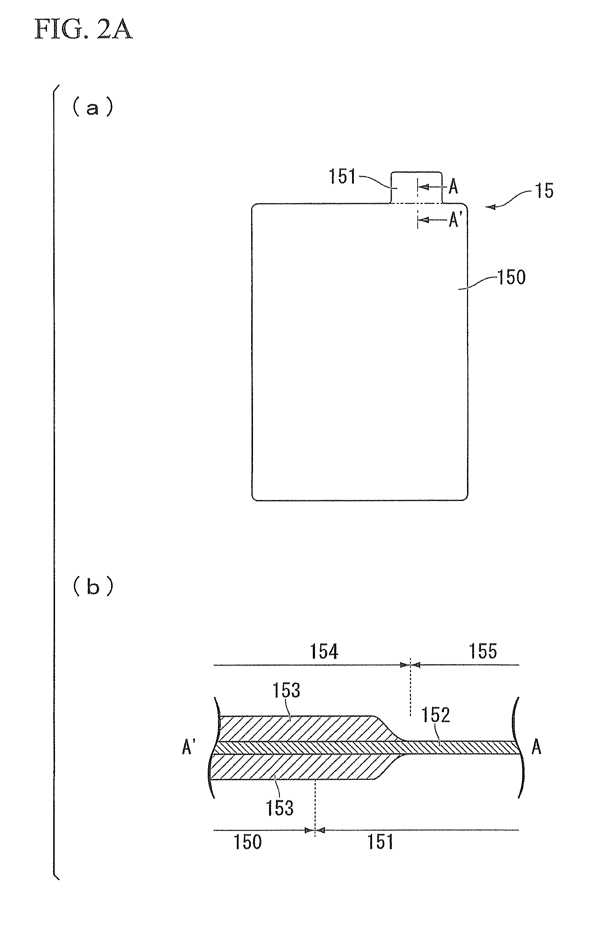

FIG. 1 is an exploded perspective view illustrating a configuration example of a battery cell. FIG. 2A is a plan view illustrating an example of an electrode plate, and FIG. 2B is a cross-sectional view taken along line A-A' of FIG. 2A.

As illustrated in FIG. 1, a battery cell 1 includes a battery container 10 in which an electrolyte is retained. For example, the battery cell 1 is a lithium-ion secondary battery. An application range of the present invention is not limited to the shape or material of the battery container. The battery container 10 of the present example is a hollow container made of aluminum and has a substantially prismatic (i.e., a substantially rectangular parallelepiped) shape. The battery container 10 includes a container body 11 having an opening and a cover 12 bonded to the container body 11 to close the opening.

Electrode terminals 13 and 14 are disposed on the cover 12. For example, the electrode terminal 13 is a positive electrode terminal, and the electrode terminal 14 is a negative electrode terminal. A plurality of electrode plates 15 and 16 and a plurality of separators 17 are housed inside the battery container 10. For example, the electrode plate 15 is a positive electrode plate, and the electrode plate 16 is a negative electrode plate. The plurality of electrode plates 15 and 16 are repetitively arranged such that the positive electrode plate and the negative electrode plate are alternately lined up.

The separator 17 is arranged to be sandwiched between a pair of electrode plates 15 and 16 and prevents the electrode plates 15 and 16 from coming in direct contact with each other. The separator 17 is made of a porous insulating material or the like and allows electrolytic components such as lithium ions to pass therethrough. Thus, a lamination body in which a plurality of positive electrode plates, a plurality of negative electrode plates, and a plurality of separators are laminated is configured. The battery cell 1 has a structure in which the lamination body is housed in the battery container 10. The electrolyte is retained to come in contact with the electrode plates 15 and 16 inside the battery container 10.

As illustrated in FIG. 2A, the electrode plate 15 includes a base portion 150 and an electrode tab 151. The base portion 150 is a portion which is arranged facing the electrode plate 16 and mainly contributes to electrical capacitance. For example, the base portion 150 has a substantially rectangular planar shape in which corner portions of a rectangular shape are round.

The electrode tab 151 is a portion which is electrically connected with the base portion 150 and the electrode terminal 13. The electrode tab 151 has one side of the base portion 150 as a base end and is formed to protrude to the outside of the base portion 150. For example, a direction in which the electrode tab 151 protrudes is substantially orthogonal to one side having the base end and parallel to the main surface of the base portion 150. The electrode tab 151 is formed to be adjacent to one end of the one side having the base end. The electrode tabs 151 of the plurality of electrode plates 15 are collectively electrically connected to the electrode terminal 13.

As illustrated in FIG. 2B, the electrode plate 15 includes a current collecting material 152 and an electrode active material 153. The current collecting material 152 is made of, for example, aluminum or copper. And the current collecting material 152 is sheet-like with the thickness of about tens of micrometers (e.g., about 20 micrometers). The electrode active material 153 is made of a formation material depending on the type of an electrolyte and disposed on both surfaces of the current collecting material 152. For example, the thickness of the electrode active material 153 ranges from about tens of micrometers to hundreds of micrometers (e.g., about 100 micrometers).

The electrode plate 15 of the present example includes a formation area 154 in which the electrode active material 153 is disposed and a non-formation area 155 in which the electrode active material 153 is not disposed. The formation area 154 ranges from almost the entire base portion 150 to a part of the electrode tab 151 at a side connected to the base portion 150. The front end side of the electrode tab 151 becomes the non-formation area 155. The electrode plate 15 is connected with a conductive member in the non-formation area 155 and electrically connected with the electrode terminal 13 via the conductive member.

The electrode plate 16 differs in a formation material of the electrode active material and a dimension of the base portion or the electrode tab from the electrode plate 15 but is the same in structure or shape as the electrode plate 15. For example, the dimension is set so that the base portion of the electrode plate functioning as the negative electrode plate can overlap the entire base portion of the electrode plate functioning as the positive electrode plate. As illustrated in FIG. 1, an electrode tab 161 of the electrode plate 16 is arranged not to overlap the electrode tab 151 of the electrode plate 15. The electrode tabs 161 of the plurality of electrode plates 16 are collectively electrically connected to the electrode terminal 14.

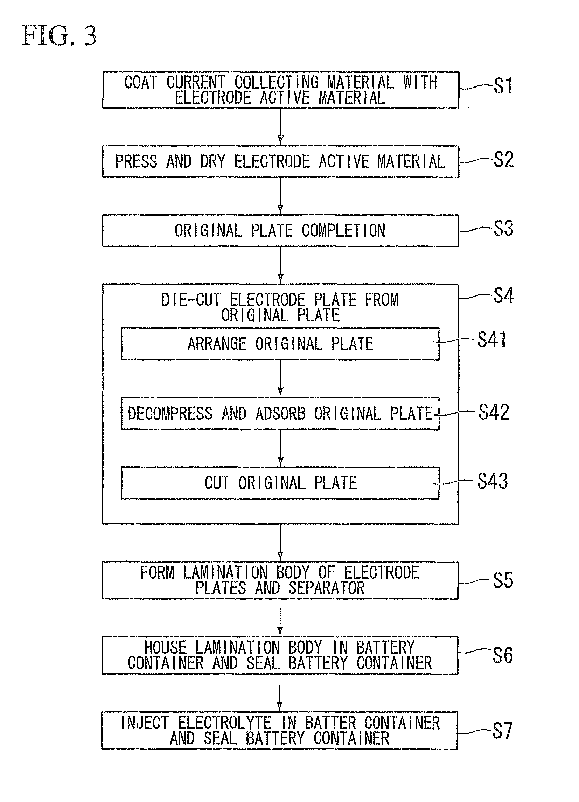

FIG. 3 is a flowchart schematically illustrating a method of manufacturing a battery cell.

In order to manufacture a battery cell 1, in step S1, a base material of a current collecting material is coated with an electrode active material. For example, the base material is a band-like conductive foil wound in a roll shape. Next, in step S2, the electrode active material is bonded to the base material by pressure, and the electrode active material is dried. By performing post processing as necessary, in step S3, an original plate of an electrode plate is completed. The original plate is one in which the electrode active material is disposed on both surfaces of the base material. Here, in step S1 to step S3, while the original plate is manufactured and prepared, the original plate may be prepared, for example, by purchasing and obtaining the manufactured original plate.

Next, in step S4, an electrode plate of a desired shape is completed, for example, by die-cutting the electrode plate from the original plate, which will be described later. Next, in step S5, a positive electrode plate and a negative electrode plate are laminated with a separator interposed between them, so that a lamination body is formed. Subsequently, in step S6, the lamination body is housed inside a battery container and sealed. Specifically, the lamination body is inserted into the container body. Then, the positive electrode plate is electrically connected with a positive electrode terminal, and a negative electrode plate is electrically connected with a negative electrode terminal. A cover is bonded to the container body, for example, by welding. Next, in step S7, for example, an electrolyte is injected into the battery container and sealed, so that a battery cell is obtained.

An electrode plate manufacturing apparatus according to the present invention performs step S4 as follows. First, in step S41, the original plate is arranged on an original plate support portion. Next, in step S42, a space between the original plate and the original plate support portion is suctioned, and so the original plate is adsorbed onto the original plate support portion. Then, in step S43, a cutting blade comes in contact with the original plate adsorbed onto the original plate support portion to thereby die-cut the original plate. An area suctioned in step S42 is set to an area which does not overlap the cutting blade in a state in which the original plate which has come in contact with the cutting blade in step S43 is viewed in a plan view. For example, the method of manufacturing the electrode plate according to the present invention may be executed by die-cutting the electrode plate from the original plate using the electrode plate die-cutting apparatus according to the present invention.

[First Embodiment]

Next, a description will be made in connection with an electrode plate die-cutting apparatus according to a first embodiment. Further, a description will be also made in connection with an embodiment of a method of manufacturing an electrode plate according to the present invention. The electrode plate die-cutting apparatus according to the present invention may be used to manufacture either of the positive electrode plate and the negative electrode plate, but a description will be herein made focusing on an example in which an electrode plate of the present invention is applied to the electrode plate 15.

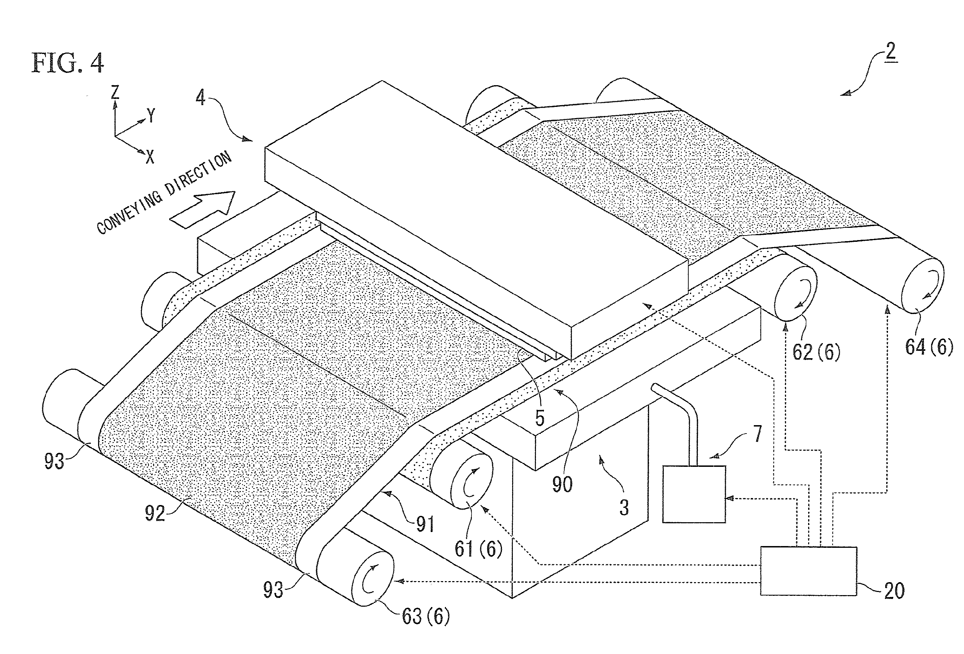

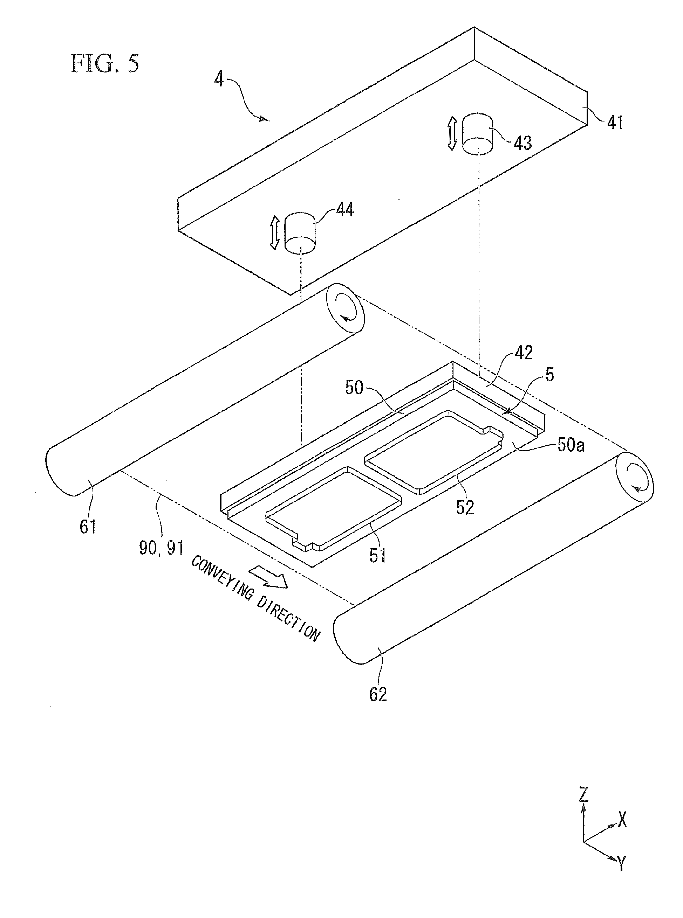

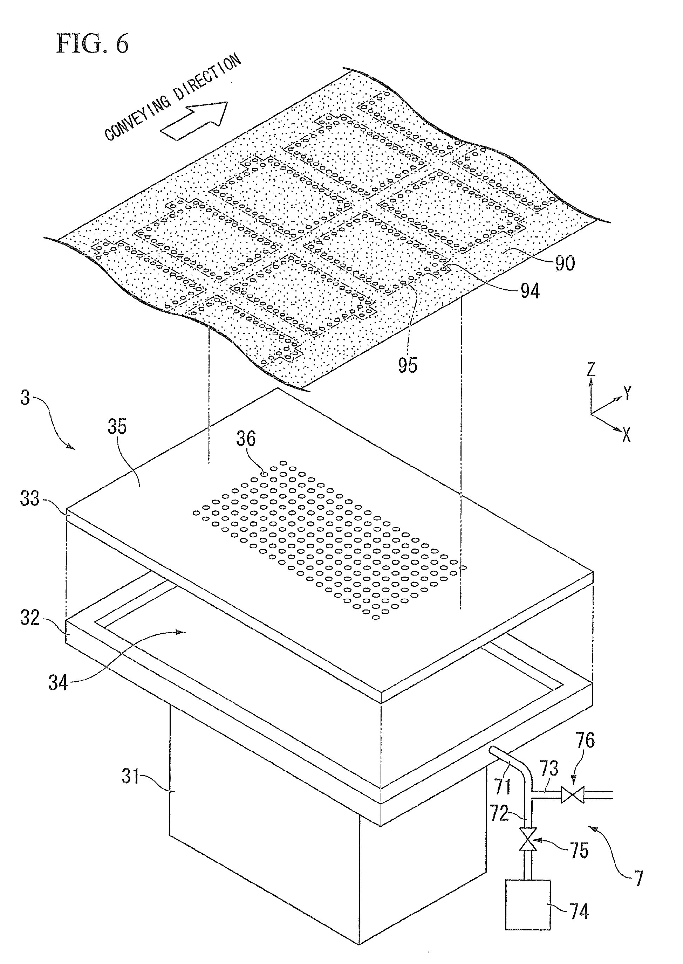

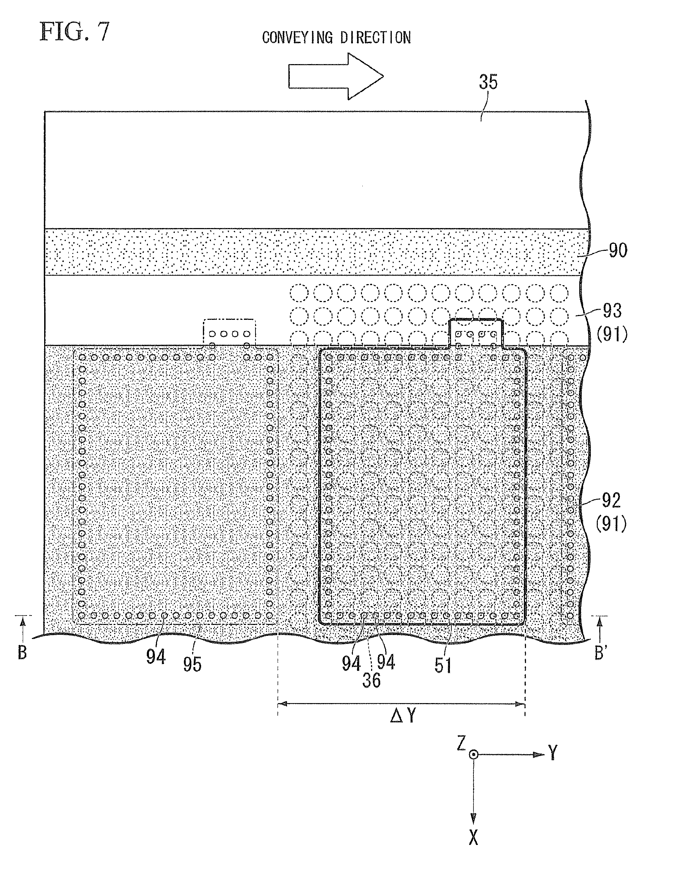

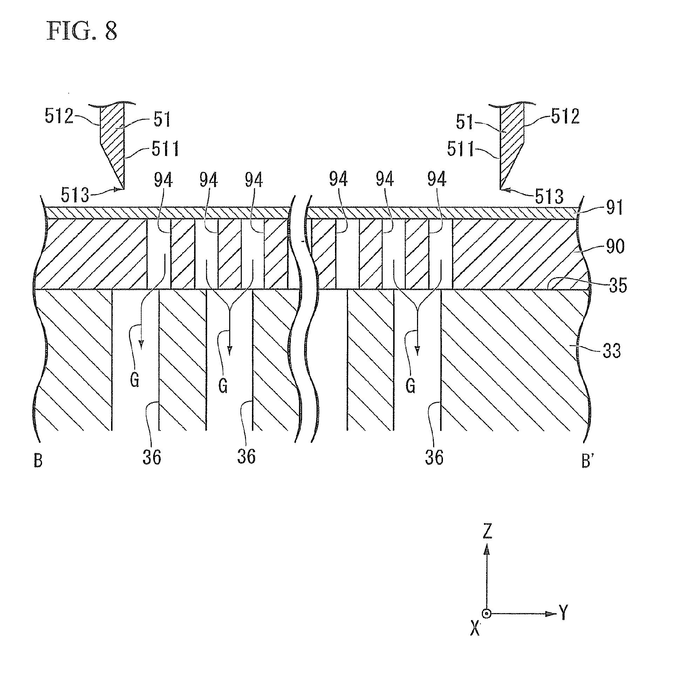

FIG. 4 is a perspective view illustrating a schematic configuration of then electrode plate die-cutting apparatus according to the first embodiment. FIG. 5 is an exploded perspective view illustrating a driving portion and a cutting die which are viewed from below. FIG. 6 is an exploded perspective view illustrating a sheet, an original plate support portion, and a pressure adjusting portion which are viewed from above. FIG. 7 is a plan arrangement view of various components when a support surface is viewed in a plan view. FIG. 8 is a view illustrating a part of a cross section taken along line B-B' of FIG. 7.

As illustrated in FIG. 4, an electrode plate die-cutting apparatus 2 according to the first embodiment includes a control portion 20, an original plate support portion 3, a driving portion 4, a cutting die 5, a conveying portion 6, and a pressure adjusting portion 7. The electrode plate die-cutting apparatus 2 is an apparatus that die-cuts the electrode plate from an original plate 91 of the electrode plate. The original plate 91 is one in which the electrode active material is disposed on both surfaces of the base material of the current collecting material as described above. The original plate 91 is superposed on a sheet 90 and then die-cut. While the details of the sheet 90 will be described later, the sheet 90 has a function of protecting the cutting blade and the original plate support portion 3 or the like.

A schematic operation of the electrode plate die-cutting apparatus 2 is as follows.

The conveying portion 6 is controlled by the control portion 20 and conveys the sheet 90 and the original plate 91 by a predetermined conveying width. The sheet 90 and the original plate 91 are superposed such that the sheet 90 is placed at the original plate support portion 3 side and conveyed via the upper surface of the original plate support portion 3. The pressure adjusting portion 7 includes a suction means and a suction releasing means. The suction means of the pressure adjusting portion 7 is controlled by the control portion 20 and causes the upper surface of the original support portion 3 to enter a suction state. Thus, the sheet 90 and the original plate 91 are suctioned onto and fixed to the original plate support portion 3.

The driving portion 4 is controlled by the control portion 20 and causes the cutting die 5 with a cutting blade to move toward the original plate 91. With the movement of the cutting die 5, the cutting blade comes in contact with the original plate 91 and cuts the original plate 91, so that the electrode plate is die-cut, After the electrode plate is die-cut, the driving portion 4 causes the cutting die 5 to retreat from the original plate 91. Further, the suction releasing means of the pressure adjusting portion 7 releases the suction state of the supper surface of the original plate support portion 3, and so the sheet 90 and the original plate 91 are released from the fixed state. The conveying portion 6 conveys the sheet 90 and the original plate 91 again by a predetermined conveying width. The electrode plate die-cutting apparatus 2 repetitively die-cuts the electrode plate in the above described manner.

Next, a description will be made in connection with the components of the electrode plate die-cutting apparatus 2. As illustrated in FIG. 4, the conveying portion 6 includes conveying rollers 61 to 64. The conveying rollers 61 and 62 are disposed to sandwich the original plate support portion 4 in a direction (a Y direction) parallel to the upper surface of the original plate support portion 3. The conveying rollers 63 and 64 are disposed to sandwich the conveying rollers 61 and 62 in the direction (Y direction) parallel to the upper surface of the original plate support portion 3. The direction is a conveying direction by the conveying rollers 61 to 64.

The conveying rollers 63 and 64 for conveying the original plate 91 are arranged at lower positions than the conveying rollers 61 and 62 for conveying the sheet 90. The original plate 91 is conveyed while being suspended from the conveying rollers 63 and 64. As the original plate 91 is suspended from the conveying rollers 61 and 62 between the conveying rollers 63 and 64, the original plate 91 is superposed on the sheet 90. The original plate 91 is superposed on the sheet 90 and conveyed with the rotation of the conveying rollers 61 to 66. The conveying rollers 61, 62, 63, and 64 convey the original plate 91 and the sheet 90 which are superposed on each other at the same timing and at the same speed. Thus, the control portion 20 which will be described later controls the conveying rollers 61, 62, 63, and 64 such that they operate in synchronization with one another.

The original plate 91 is die-cut by the cutting die 5, and superposed on the sheet 90 in a state in which the conveying rollers 61 to 64 stop.

As illustrated in FIGS. 4 and 5, the driving portion 4 includes a base 41, a holding portion 42, and support posts 43 and 44. The base 41 includes an actuator or the like therein. The support posts 43 and 44 are disposed to protrude downward from the base 41. The actuator of the base 41 is controlled by the control portion 20 illustrated in FIG. 4 and causes the support posts 43 and 44 to move upward and downward.

The holding portion 42 is attached to the support posts 43 and 44. For example, the holding portion 42 detachably holds the cutting die 5 and is configured so that the cutting die 5 can be easily replaced. With the up-down movement of the support posts 43 and 44, the holding portion 42 moves in an up-down direction, and the cutting die 5 held on the holding portion 42 moves forward or backward with respect to the upper surface of the original plate support portion 3.

The cutting die 5 includes a support substrate 50 and cutting blades 51 and 52. For example, the cutting die 5 is of a Thomson type, and the cutting blades 51 and 52 are Thomson cutters. The cutting die 5 is held on the holding portion 42 in a posture in which blade edges of the cutting blades 51 and 52 face the upper surface of the original plate support portion 3.

The support substrate 50 includes a facing surface 50a arranged to face the upper surface of the original plate support portion 3. For example, the support substrate 50a is a substantially flat plate member. The cutting blades 51 and 52 are the same as each other and disposed on a substantially flat surface of the support substrate 50. The cutting blades 51 and 52 are arranged to be symmetric to a line substantially parallel to the conveying direction, for example, to a center line of the original plate 91.

The cutting blade 51 is disposed to straddle the formation area 92 and the non-formation area 93 of the original plate 91 (see FIG. 7). The formation area 92 die-cut by the cutting blade 51 mainly becomes the base portion 150 of the electrode plate 15. The non-formation area 93 die-cut by the cutting blade 51 mainly becomes the electrode tab 151 of the electrode plate 15.

When the facing surface 50a is viewed in a plan view, the planar shapes of the cutting blades 51 and 52 are closed case shapes and almost match a contour of the electrode plate. The cutting blades 51 and 52 are configured with a band-like plate body, and the blade edges thereof are disposed along one long side of the plate-like body. The plate thickness of the plate-like body ranges, for example, from about 0.5 mm to about 2.0 mm. In the cutting blades 51 and 52, the width direction of the plate-like body is substantially vertical to the facing surface 50a, and the cutting blades 51 and 52 are embedded in the support substrate 50.

Here, the cutting blades 51 and 52 are configured with a single-edged blade (see FIG. 8). In the cutting blade 51, a front end of an inner circumferential surface 511 facing a portion that becomes the electrode plate 15 has a blade edge 513.

An outer circumferential surface 512 which is the back side of the inner circumferential surface 511 is inclined such that as the outer circumferential surface 512 approaches the blade edge 513, the outer circumferential surface 512 becomes closer to the inner circumferential surface 511. This is similarly applied to the cutting blade 52.

The original plate support portion 3 illustrated in FIGS. 4 and 6 is, for example, a work table and includes a pedestal 31, a box-like body 32, and a top plate 33. The box-like body 32 is fixed onto the pedestal 31.

The box-like body 32 includes a concave portion 34, which is opened, at a side opposite to the pedestal 31. The top plate 33 is fixed to the box-like body 32 to close the concave portion 34.

The upper surface of the original plate support portion 3, that is, the upper surface of the top plate 33, becomes the support surface 35. The sheet 90 is arranged to come in contact with the support surface 35. When the cutting die 5 presses the original plate 91, the support surface 35 indirectly supports the original plate 91 by supporting the sheet 90 from the side opposite to the cutting die 5. The concave portion 34 configures a part of a flow path of the suction means of the pressure adjusting portion 7. Inside the concave portion 34, a rib structure or a support post is disposed as necessary so that the top plate 33 cannot be bent, for example, when the inside of the concave portion 34 is decompressed. A plurality of hole portions 36 are disposed in the support surface 35. The hole portions 36 penetrate the top plate 33 and communicates with the concave portion 34.

The pressure adjusting portion 7 includes a pipe 71, a first branch pipe 72, a second branch pipe 73, a decompressing portion 74, a first valve 75, and a second valve 76. The pipe 71 communicates with the concave portion 34 and branches off to the first and second branch pipes 72 and 73. The first branch pipe 72 is connected to the decompressing portion 74. The decompressing portion 74 is configured with a pump or the like. The first valve 75 is disposed in the first branch pipe 72 and starts or stops the flow inside the first branch pipe 72. The second branch pipe 73 is opened with respect to the atmosphere around the electrode die-cutting apparatus 2. The second valve 76 is disposed in the second branch pipe 73 and starts or stops the flow inside the second branch pipe 73.

The suction means of the present embodiment includes the concave portion 34, the hole portions 36, the pipe 71, the first branch pipe 72, the first valve 75, and the decompressing portion 74. When the second valve 76 is closed and the first valve 75 is opened in a state in which the decompressing portion 74 is turned on, gas inside the flow path configured with the first branch pipe 72, the pipe 71, the concave portion 34, and the hole portions 36 are exhausted, and the vicinity of the support surface 35 enters a suction state. Turning on/off of the decompressing portion 74 and opening/closing of the first valve 75 are controlled by the control portion 20.

The suction releasing means of the present embodiment includes the concave portion 34, the hole portions 36, the pipe 71, the second branch pipe 73, and the second valve 76. When the suction means causes the support surface 35 to enter the suction state, if the first valve 75 is closed and the second valve 76 is opened, external air around the electrode die-cutting apparatus 2 flows to the vicinity of the support surface 35 via the flow path configured with the second branch pipe 73, the pipe 71, the concave portion 34, and the hole portions 36, so that the suction state is released. Opening/closing of the second valve 76 is controlled by the control portion 20.

In the pipe 71 of the present embodiment, an axial direction of a portion connected to the inside of the concave portion 34 is set so that external air directed toward the concave portion 34 from the pipe 71 cannot be directly infused into the hole portion 36. Here, the pipe 71 is connected to the sidewall of the concave portion 34, and external air flowing into the concave portion 34 flows in a direction substantially parallel to the support surface 35. Thus, when the suction state is released, the sheet 90 and the original plate 91 do not easily rise from the support surface 35.

Instead of the second branch pipe 73, a second pipe which communicates with the concave portion 34 may be disposed separately from the pipe 71. By mounting the second valve 76 in the second pipe, the suction releasing means is configured. The second branch pipe 73 or the second pipe is connected to a pressurizing device, and the suction releasing means is configured to include the pressurizing device. By pressing external air through the pressurizing device and then introducing the pressurized air into the pipe 71, the suction state can be more rapidly released. A plurality of pipes 71 or a plurality of branch pipes obtained by branching off the pipe 71 may be connected to a plurality of positions of the concave portion 34. In this case, the pressure distribution inside the concave portion 34 can be uniform, and a degree of suction can be uniform in a direction parallel to the support surface 35.

The sheet 90 is made of a material which is lower in hardness than the cutting blades 51 and 52 (e.g., a resin sheet). When the original plate 91 is die-cut, the thickness of the sheet 90 is set so that the blade edges of the cutting blades 51 and 52 cannot come in direct contact with the support surface 35. Since the sheet 90 is interposed between the support surface 35 and the blade edge, the support surface 35 and the blade edge are protected from damage caused by mutual contact between them.

As illustrated in FIGS. 6 to 8, a plurality of through holes 94 are disposed in the sheet 90. In a condition viewing the support surface 35 in a planar view, an area on the support surface 35 surrounded by the cutting blade 51 is referred to as a die-cutting area. An area on the sheet 90 obtained by parallel-shifting the die-cutting area to the upstream side in the conveying direction by an integer multiple of a conveying width $\Delta Y$ (a pitch at which the original plate 91 is die-cut) is an area to be arranged on the die-cutting area while die-cutting and conveying are repeated (hereinafter referred to as "die-cutting scheduled area 95").

The plurality of through holes 94 are arranged to be included in the die-cutting area or the die-cutting scheduled area 95. When the through holes 94 included in one die-cutting scheduled area 95 among the plurality of through holes 94 are regarded as one group, a plurality of groups are repetitively disposed in the conveying direction at intervals substantially equal to the conveying width $\Delta Y$ of the conveying portion 6. That is, each time the sheet 90 is conveyed by the conveying width $\Delta Y$ of the conveying portion 6, the through holes 94 belonging to the group are disposed on an area that does not overlap the cutting blade 51 in a plan view.

The through holes 94 of the present embodiment are disposed along the inner circumference of the planar shape of the cutting blade 51 at substantially regular intervals at the position apart from the inner circumference. The through holes 94 belonging to one group have the same opening shape and the same opening dimension. The opening shape of the through hole 94 is selected from a polygonal shape, a polygonal shape with round corners, a circular shape, an elliptical shape, a straight line shape, a shape surrounded by a free curve, and the like. Here, the through hole 94 has a substantially circuit shape. The opening dimension of the through hole 94 is set based on a suction force of the decompressing portion 74 or mechanical characteristics of the original plate 91 (an example of a setting method will be described later). Typically, the opening dimension of the through hole 94 is set to an order approximately equal to the plate thickness of the cutting blade 51 (e.g., about 0.5 mm to about 2.0 mm).

For example, the distance between the inner circumference of the planar shape of the cutting blade 51 and the through hole 94 ranges from about 1 mm to about 10 mm. The distance is set to so that the through hole 94 can be arranged at the position closer to the end portion of the electrode plate in order to prevent the die-cut electrode plate from rising, leading to positional deviation when the original plate 91 is die-cut by the cutting blade 51.

Here, the opening dimension of the through hole 94 is smaller than the opening dimension of the hole portion 36. In a condition viewing the support surface 35 in a planar view, the plurality of (two in the drawing) through holes 94 overlap one hole portion 36, and at least a part of the through hole 94 overlaps the hole portion 36.

An arrangement pattern of the through holes 94 belonging to one group or an arrangement pattern of the hole portions 36 of the top plate 33 is set so that the through hole 94 arranged inside the cutting blade 51 in a plan view can communicate with the hole portion 36. The hole portion 36 is disposed even on a portion which does not communicate with the through hole 94. The original plate 91 (or the electrode plate) is fixed to the support surface 35 of the top plate via the sheet 90 by adsorbing the original plate 91 onto the communicated portion, and the sheet 90 is fixed to the support surface 35 of the top plate by adsorbing the sheet 90 onto the non-communicated portion.

Specifically, when a gas G inside the hole portion 36 or the through hole 94 is exhausted by the suction means, the original plate 91 is pressed toward the support surface 35 due to a pressure difference between the upper and lower surfaces of the original plate 91.

The sheet material 90 is pressed toward the support surface 35 by the original plate 91. Further, even when the inside of the hole portion 36 which does not communicate with the through hole 94 is decompressed, the sheet 90 is compressed toward the support surface 35.

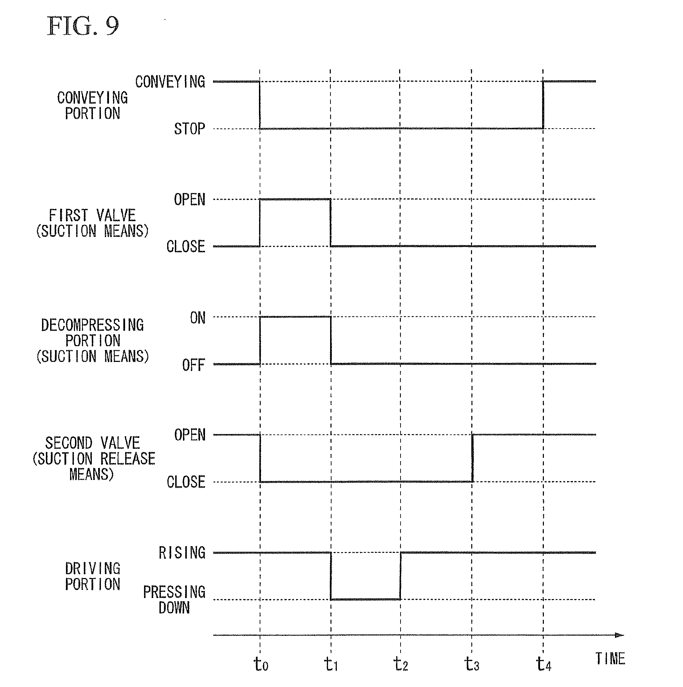

Next, a description will be made in connection with an operation example of the electrode plate die-cutting apparatus 2. FIG. 9 is a timing chart illustrating an operation example of the electrode plate die-cutting apparatus.

As illustrated in FIG. 9, the control portion 20 causes the conveying portion 6 to be in a conveying state and then causes the conveying portion 6 to be in a stopped state at a time t0 so that the original plate 91 and the sheet 90 can be conveyed a predetermined conveying width ΔY. Thus, one group of through holes 94 of the sheet 90 is arranged on the die-cutting area. Before the time t0, the first valve 75 is in a closed state, the decompressing portion 74 is in an off state, the second valve 76 is an open state, and the driving portion 4 is in a state in which the cutting die 5 has retreated from the original plate 91 (which is indicated as "rising" in FIG. 9).

At the time t0, the control portion 20 causes the first valve 75 to be in the open state, the decompressing portion 74 to be in the on state, and the second valve 76 to be in the closed state. Thus, the original plate 91 and the sheet 90 are adsorbed onto and fixed to the support surface 35.

At a time t1 after the original plate 91 and the sheet 90 are fixed, the control portion 20 causes the first valve 75 to be in the closed state and the decompressing portion 74 to be in the off state. Further, the control portion 20 controls the driving portion 4 such that the cutting die 5 moves toward the original plate 91 (which is indicated as "pressing down" in FIG. 9). Thus, the cutting blades 51 and 52 come in contact with the original plate 91, so that the electrode plate 15 is die-cut. Since the original plate 91 is fixed, positional deviation of the cutting blades 51 and 52 is avoided, and the electrode plate 15 of the highly accurate shape is obtained. Further, since the sheet 90 is interposed between the blade edges of the cutting blades 51 and 52 and the support surface 35, damage of the blade edge or the support surface 35 is avoided.

At a time t2 after the original plate 91 is die-cut, the control portion 20 causes the second valve 76 to remain in the closed state and controls the driving portion 4 such that the cutting die 5 retreats from the original plate 91. Since the original plate 91 and the sheet 90 are adsorbed onto the support surface 35, the die-cut electrode plate 15 is prevented from moving together with the cutting blades 51 and 52.

At a time t3 after the cutting die 5 retreats from the original plate 91, the control portion 20 causes the second valve 76 to be in the open state. Thus, the pressure difference between the upper and lower surfaces of the portion closing the through hole 94 disappears, the suction state near the support surface 35 is released, and the original plate 91 and the sheet 90 are released from the fixed state.

At a time t4 after the original plate 91 and the sheet 90 are released from the fixed state, the control portion 20 causes the conveying portion 6 to enter the conveying state and then causes the conveying portion 6 to convey the original plate 91 and the sheet 90 a predetermined conveying width ΔY. Then, similarly to the above described manner, the control portion 20 controls operations of the conveying portion 6, the suction means, the driving portion 4, and the suction release means. In this way, the electrode plate die-cutting apparatus 2 repetitively die-cuts the electrode plate 15 from the original plate 91. Since a series of operations are controlled by the control portion 20, the die-cutting process can be automated, and the electrode plate 15 can be efficiently die-cut.

Even after the time t4, until the sheet 90 is wound on the conveying roller 62, the die-cut electrode plate is adsorbed onto an electrode plate placing device (not shown) such as an arm and sequentially placed on a separately prepared table (not shown).

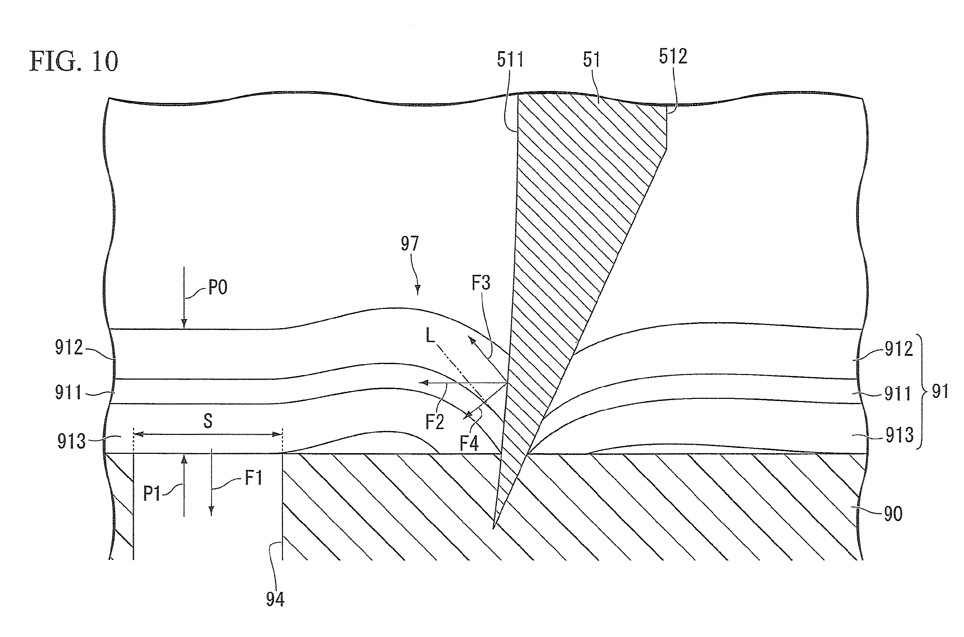

According to the electrode plate die-cutting apparatus 2, as will be described next, exfoliation or separation of the electrode active material can be reduced. FIG. 10 is an explanatory view illustrating a force acting on the original plate at the time of cutting.

As illustrated in FIG. 10, when the cutting blade 51 penetrates the original plate 91, the cutting surface at the inner circumferential surface 511 side of the cutting blade 51 and the cutting surface at the outer circumferential surface 512 are expanded, in opposite directions, by the thickness of the cutting blade 51 of the penetrated portion. Thus, both end portions divided by cutting of the original plate 91 are compressed in a direction parallel to the main surface of the original plate 91, respectively.

Meanwhile, in a typical electrode plate die-cutting apparatus, a pressing member of the original plate is disposed at a position close enough to come in contact with the cutting blade. Thus, at the time of cutting, a range in which deformation of the original plate is allowed is confined to the immediate vicinity of the cutting blade, and distortion in the vicinity of the cutting surface is difficult to mitigate. Further, since the original plate is typically cut by the entire circumference of the cutting blade almost at the same time, distortion is difficult to mitigate even in the circumferential direction of the cutting blade. Since distortion is difficult to mitigate due to compression, a compression force intensively acts on the vicinity of the cutting surface. When a compression force acts intensively, the current collecting material and the electrode active material cannot be deformed in a manner of following each other, and a shear force acts in the direction parallel to the interface between the current collecting material and the electrode active material (hereinafter referred to simply as an "interface"). Since a range in which deformation of the original plate is allowed is confined, the vicinity of the cutting surface is difficult to deform by bending. Thus, a compression force acts in the direction approximately parallel to the main surface of the original plate, and most of the compression force contributes to the shear force. In this way, adhesion between the current collecting material and the electrode active material is lowered.

The electrode plate 15 die-cut by applying the present invention is compared with an electrode plate die-cut in a typical manner. An end portion 97 of the original plate 91 including the cutting surface at the inner circumferential surface 511 of the cutting blade 51 is a portion which becomes an edge portion of the electrode plate 15. The original plate 91 is pressed against the sheet 90 by a portion closing the through hole 94 (hereinafter referred to as a "closing portion") since the inside of the through hole 94 has been decompressed. A force F1 pressing the original plate 91 is represented by the following equation (1):

$$F1 = (P0 - P1) \times S \qquad\qquad (1),$$

where P0 represents pressure of the upper surface of the closing portion, P1 represents pressure of the inside of the through hole 94, and S represents an opening area of the through hole 94.

The position of the original plate 91 of the closing portion is restricted by a force F1. For example, it is preferable that P0 is atmosphere pressure, and P1 is about 50 kPa to about 80 kPa. The end portion 97 receives a compression force F2 from the inner circumferential surface 511 of the cutting blade 51, and a portion from the inner circumferential surface 511 to the through hole 94 is mainly deformed. Since the through hole 94 is arranged not to overlap the cutting blade in a plan view, a range in which deformation is allowed is secured in the end portion. Thus, distortion by compression is easy to mitigate, and a compression force acting on the end portion 97 is reduced. Further, in a portion from the inner circumferential surface 511 to the through hole 94, deformation in the normal direction of the support surface 35 is also allowed, and a tangential line of the interface in the portion coming in contact with the inner circumferential surface 511 is inclined to the normal direction of the inner circumferential surface 511.

The compression force F2 is split into a component force F3 parallel to a tangential line L and a component force F4 vertical to the tangential line L. The component force F3 is a force which deviates the current collecting material 911 and the electrode active materials 912 and 913 similarly to the shear force. The component force F4 is a force which causes the current collecting material 911 and the electrode active materials 912 and 913 to approach each other in a portion coming in contact with the inner circumferential surface 511. That is, the component force F4 acts to cause the current collecting material 911 and the electrode active materials 912 and 913 to adhere to each other.

As the inclination of the tangential line L to the direction parallel to the main surface of the original plate 91 increases, a ratio of the component force F4 to the component force F3 increases. That is, as the inclination of the tangential line L increases, the shear force that causes the electrode active materials 912 and 913 to be exfoliated from the current collecting material 911 decreases, and a force that causes the electrode active materials 912 and 913 to adhere to the collecting material 911 increases. That is, since the through hole 94 is apart from the inner circumferential surface 511 of the cutting blade 51, the inclination of the tangential line L can increase, and an effect of increasing an adhesion force by the component force F4 can be more excellent than an effect of reducing an adhesion force by the component force F3.

As described above, in the electrode plate 15 die-cut by applying the present invention, since distortion by compression is mitigated, the compression stress acting thereon decreases, the component force of the compression force which contributes the shear force decreases, and the component force of the compression force which causes the current collecting material to adhere to the electrode active material increases. Thus, exfoliation of the electrode active materials 912 and 913 from the current collecting material 911 is significantly reduced, and separation of the electrode active materials 912 and 913 from the current collecting material 911 is significantly reduced.

The cutting blade 51 is configured with a single-edged blade, and the inner circumferential surface 511 penetrates the original plate 91 from the substantially normal direction of the original plate 91. Thus, since displacement of the cutting surface at the end portion 97 side decreases, and the compression force F2 can be reduced, exfoliation or separation of the electrode active materials 912 and 913 in the end portion 97 can be reduced.

If the circumferential direction of the cutting blade 51 is considered, since the through holes 94 are discretely arranged, distortion of the original plate 91 is easy to mitigate between the through holes 94, and the compression stress can be reduced. Since the through holes 94 are lined up along the inner circumferential surfaces 511 of the cutting blade 51 at substantially regular intervals, distortion dispersed between the through holes 94 can be prevented from being accumulated in the circumferential direction of the cutting blade 51, and it is prevented to cause distortion in the die-cut electrode plate 15.

Since the opening dimension of the through hole 94 is smaller than the opening dimension of the hole portion 36, a problem in that the through hole 94 suddenly does not communicate with the hole portion 36, for example, due to positional deviation is avoided. Compared to the case in which the opening dimension or the through hole 94 is larger than the opening dimension of the hole portion 36, the problem can be similarly avoided, and the area size of the closing portion can be reduced. Thus, rigidity of the closing portion can increase, and damage of the electrode plate 15 caused since the closing portion is overwhelmed by the suction force and plastic-deformed can be avoided. Particularly, in the present embodiment, the plurality of through holes 94 are arranged to overlap one hole portion 36 in a plan view. Thus, the opening dimension of the hole portion 36 can be larger than the opening dimension of the through hole 94, the interval of the hole portion 36 can increase, and the strength of the top plate 33 of the portion in which the hole portion is disposed can be easily secured.

Since the original plate 91 is suctioned and fixed, the need to dispose a member pressing the original plate 91 to the side from the cutting blade 51 so as to fix the original plate 91 is reduced. By simplifying or omitting the pressing member, for example, the maintenance frequency of the pressing member can be reduced. Further, it is possible to prevent a foreign substance from being generated when a part of the pressing member is separated and adheres to the electrode plate.

Next, a description will be made in connection with an example of a method of setting a pressure difference between the upper and lower surfaces of the original plate 91 occurring when the decompressing portion 74 is decompressed. For example, the pressure difference is set to satisfy a condition in which the die-cut electrode plate 15 does not move together with the cutting blade 51 or a condition in which the original plate 91 of the portion overlapping the through hole 94 in a plan view is not damaged.

The former condition is obtained based on a simple model as follows. The force F1 corresponding to an adsorption force near the through hole 94 is represented by Equation (1). A total adsorption force F near the electrode plate is represented by the following Equation (2).

$$F = (P0 - P1) \times S \times n \qquad\qquad (2),$$

where n is the number of through holes 94 per electrode plate.

If a frictional force F5 acting on the cutting surface when the cutting blade 51 retreats from the die-cut electrode plate 15 is larger than the total absorption force F, it is possible to prevent the electrode plate 15 from retreating together with the cutting blade 51 as the cutting blade 51 retreats. Preferably, for example, F5 is obtained by an experiment or the like, and the number n of through holes 94, then opening area S, and the pressure difference (P0-P1) representing a degree of decompression by the decompressing portion 74 are set to satisfy a condition of F5<F. Thus, for example, a lower limit value of a degree of vacuum due to decompression by the decompressing portion 74 can be obtained.

The latter condition is set based on a material of the original plate 91. A shear force $\tau$ acting in the plate thickness direction of the original plate 91 at the edge portion of the through hole 94 is represented by "$\tau=F1/t/L$," where t represents the plate thickness of the original plate 91, and L1 represents the circumferential length of the through hole 94. A mechanical characteristic of the original plate 91 such as Young's modulus or an elastic region is decided according to a material of the original plate 91. Using the mechanical characteristic of the original plate 91, when the original plate 91 causes the inside of the through hole 94 to be bent in the suction state to an upper limit value of bending which does not cause the electrode active material to crack. Further, when the suction state is released, it is possible to obtain an upper limit value of the amount of bending which does not cause a residual strain in the die-cut electrode plate 15. Based on the upper limit value, for example, an upper limit value of a degree of vacuum due to decompression by the decompressing portion 74 can be obtained.

[Second Embodiment]

Next, a description will be made in connection with an electrode plate die-cutting apparatus according to a second embodiment. The second embodiment is different from the first embodiment in that a detecting portion for detecting the relative position of a through hole relative to a cutting blade is provided, and a control portion controls a conveying portion based on a detection result of the detecting portion.

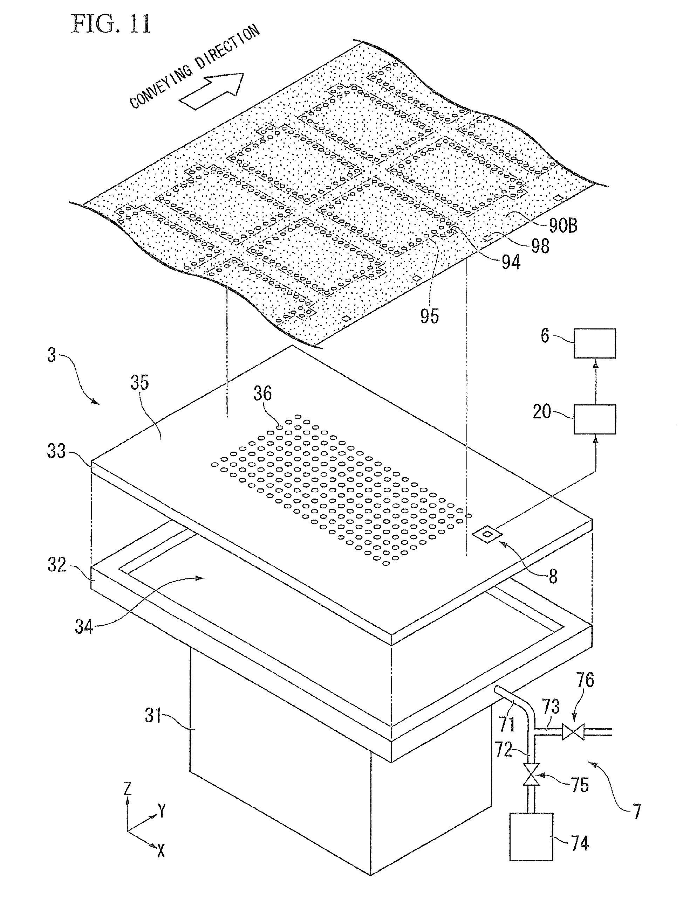

FIG. 11 is an exploded perspective view illustrating a schematic configuration of an original plate support portion of the electrode plate die-cutting apparatus according to the second embodiment. As illustrated in FIG. 11, in the present embodiment, a detecting portion 8 is disposed on a top plate 33 of an original plate support portion 3B. An alignment mark 98 detectable by the detecting portion 8 is disposed on a sheet 90B. The sheet 90B is wider than the original plate 91, and the alignment mark 98 is arranged on a side end portion of the sheet 90B in which the sheet 90B and the original plate 91 do not overlap each other. Further, the alignment mark is arranged at a predetermined relative position relative to an arrangement pattern of through holes 94.

As the detecting portion 8 and the alignment mark 98, any detectable by a known detecting method may be appropriately selected and employed. For example, a coating material, may be attached to the sheet and used as the alignment mark, and a device for optically detecting the alignment mark may be employed as the detecting portion.

The alignment mark 98 of the present embodiment is configured with a through hole formed together with the through hole 94. Similarly to the sheet 90 of the first embodiment illustrated in FIG. 4, a dimension of the sheet 90B in a direction parallel to a support surface 35, that is, a direction. (an X direction) orthogonal to a conveying direction, is larger than the original plate 91. The sheet 90B protrudes outward further than the original plate 91 in the orthogonal direction. The alignment mark 98 is disposed in the portion of the sheet 90B protruding further than the original plate 91. Groups of the through holes 94 are lined up, at a pitch at which the original plate 91 is die-cut, in the conveying direction, and the alignment marks 98 are also lined up at regular intervals at the pitch in the conveying direction.

For example, the detecting portion 8 includes a photosensitive element and detects light incident to the detecting portion 8. The detecting portion 8 is arranged on a path through which the alignment mark 98 passes above the top plate 33 with the conveyance of the sheet 90B. When the alignment mark 98 passes above the detecting portion 8, light having passed through the alignment mark 98 is detected by the detecting portion 8. Thus, the position of the alignment mark 98 is detected, and since the relative position of the detecting portion 8 and the cutting blade and the relative position of the alignment mark 98 and the through hole 94 are already known, the relative position of the through hole 94 relative to the cutting blade is detected.

The top plate 33 is a member near the sheet 90B, and the detecting portion 8 is disposed on the top plate 33. Thus, light having passed through the alignment mark 98 can be detected with a high degree of accuracy. As a result, the relative position of the through hole 94 relative to the cutting blade can be detected with a high degree of accuracy.

A detection result detected by the detecting portion 8 is output to the control portion 20. Based on the detection result, the control portion 20 controls the conveying portion 6 so that the through holes 94 belonging to one group are included inside an area surrounded by the cutting blade in a condition viewing the support surface 35 in a planar view. Examples of a method of controlling the conveying portion 6 include the following methods.

In a first method, the alignment mark and the detecting portion are arranged so that the alignment mark can be detected at a point in time before the through hole 94 reaches a predetermined position. An actual moving speed of the sheet is calculated based on a time period in which the alignment mark is detected, a dimension of the alignment mark, or the like. Then, the conveying speed by the conveying portion 6 is adjusted based on the distance at which the sheet is conveyed and the moving speed after the alignment mark is detected. Then, the conveyance by the conveying portion 6 stops so that the through hole 94 corresponding to the detected alignment mark can be positioned at a predetermined position.

A second method includes comparing a detection result when the sheet 90B is conveyed by a previously set conveying width with an actually detected detection result and adjusting, for example, a driving force of the conveying portion 6 so that an error of the conveying width can be reduced. When the error of the conveying width has exceeded an allowable range, the method may include performing alignment again by normally or reversely rotating the conveying rollers 61 to 64. On a die-cutting area when an error has exceeded an allowable range, the method may include correcting the conveying width of the conveying portion 6 based on the error without performing die-cutting and continuing the conveyance up to the next die-cutting scheduled area 95.

According to the electrode plate die-cutting apparatus of the second embodiment, since the control portion 20 controls the conveying portion 6 based on the detection result of the detecting portion 8, the through hole 94 can be arranged with a high degree of positional accuracy not to overlap the cutting blade in a plan view. Thus, a predetermined position in the direction parallel to the support surface 35 can enter the suction state, and the relative position of the portion of the original plate 91 coming in contact with the cutting blade 51 and the portion of the original plate 91 adsorbed onto the support surface 35 side can be managed with a high degree of accuracy. As a result, for example, a degree of positional accuracy is not easily influenced by time degradation of the driving component of the conveying portion 6, and it is possible to stably reduce exfoliation or separation of the electrode active material.

The exemplary embodiments of the present invention have been described above, but the present invention is not limited to the above embodiments. Addition, omission, replacement, and other alternation can be made in a range not departing from the gist of the present invention. The present invention is not limited to the above description and confined only by the accompanying claims.

[Industrial Applicability]

It is possible to provide an electrode plate manufacturing apparatus that performs die-cutting (punching) of the electrode plate in which exfoliation or separation of the electrode active material does not easily occur.

[Description of Reference Numerals]

| | |
|---|---|
| 1: | Battery cell |
| 2: | Electrode plate die-cutting apparatus |
| 3, 3B: | Original plate support portion |
| 4: | Driving portion |
| 5: | Cutting die |
| 6: | Conveying portion |
| 7: | Pressure adjusting portion |
| 8: | Detecting portion |
| 10: | Battery container |
| 11: | Container body |
| 12: | Cover, |
| 13, 14: | Electrode terminal |
| 15, 16: | Electrode plate |
| 17: | Separator |
| 20: | Control portion |
| 31: | Pedestal |

| | |
|---|---|
| 32: | Box-like body |
| 33: | Top plate |
| 34: | Concave portion |
| 35: | Support surface |
| 36: | Hole portion (decompressing means) |
| 41: | Base |
| 42: | Holding portion |
| 43, 44: | Support post |
| 50: | Support substrate |
| 50a: | Facing surface |
| 51, 52: | Cutting blade |
| 61 to 64: | Conveying roller (conveying portion) |
| 71: | Pipe |
| 72: | First branch pipe |
| 73: | Second branch pipe |
| 74: | Decompressing portion (decompressing means) |
| 75: | First valve |
| 76: | Second valve |
| 90, 90B: | Sheet |
| 91: | Original plate |
| 92: | Formation area |
| 93: | Non-formation area |
| 94: | Through hole |
| 95: | Die-cutting scheduled area |
| 97: | End portion |
| 98: | Alignment mark |
| 150: | Base portion |
| 151: | Electrode tab |
| 152: | Current collecting material |

| | |
|---|---|
| 153: | Electrode active material |
| 154: | Formation area |
| 155: | Non-formation area |
| 161: | Electrode tab |
| 511: | Inner circumferential surface |
| 512: | Outer circumferential surface |
| 513: | Blade edge |
| 911: | Current collecting material |
| 912, 913: | Electrode active material |
| F: | Total adhesion force |
| F1: | Force |
| F2: | Compression force |
| F3: | Component force |
| F4: | Component force |
| F5: | Frictional force |
| G: | Gas |
| L: | Tangential line |
| S: | Opening area |
| S1 to S7, S41 to S43: | Step |
| t0~t4: | Time |
| $\Delta Y$: | Conveying width |

**Claims**

1. An electrode plate manufacturing apparatus, comprising:

   an original plate support portion having a support surface which supports an original plate of an electrode plate;
   a driving portion that drives a cutting blade, which is arranged with a blade edge facing the original plate support portion, to move forward or backward; and
   a pressure adjusting portion that suctions the original plate on the support surface when the cutting blade is moving toward the original plate support portion by the driving portion.

2. The electrode plate manufacturing apparatus according to claim 1, further comprising a sheet that is arranged to come in contact with the support surface, is made of a material lower in hardness than the cutting blade, and includes a plurality of through holes arranged not to overlap the cutting blade in a condition of viewing the support surface in a planar view,
   wherein the original plate support portion includes a hole portion which communicates with the through hole, and

the pressure adjusting portion performs suction through the through hole and the hole portion which communicate with each other.

3. The electrode plate manufacturing apparatus according to claim 2, wherein the plurality of through holes are arranged along a shape of the electrode plate in an area inside the original plate to be die-cut in a condition of viewing the support surface in a planar view when the cutting blade moves forward and then punches the original plate along the shape of the electrode plate.

4. The electrode plate manufacturing apparatus according to claim 3, further comprising:

a first conveying portion that conveys the original plate;
a second conveying portion that conveys the sheet; and
a control portion that controls conveyance of the first and second conveying portions,
wherein an alignment mark is arranged in the sheet, and
the control portion detects the alignment mark and controls the first and second conveying portions to make the communication.

FIG. 1

## FIG. 2A

(a)

151

A

A'

15

150

(b)

154 155

153

152

A' 153 A

150 151

FIG. 3

| COAT CURRENT COLLECTING MATERIAL WITH ELECTRODE ACTIVE MATERIAL | —S1 |

↓

| PRESS AND DRY ELECTRODE ACTIVE MATERIAL | —S2 |

↓

| ORIGINAL PLATE COMPLETION | —S3 |

↓

DIE-CUT ELECTRODE PLATE FROM ORIGINAL PLATE —S4

| ARRANGE ORIGINAL PLATE | —S41 |

↓

| DECOMPRESS AND ADSORB ORIGINAL PLATE | —S42 |

↓

| CUT ORIGINAL PLATE | —S43 |

↓

| FORM LAMINATION BODY OF ELECTRODE PLATES AND SEPARATOR | —S5 |

↓

| HOUSE LAMINATION BODY IN BATTERY CONTAINER AND SEAL BATTERY CONTAINER | —S6 |

↓

| INJECT ELECTROLYTE IN BATTER CONTAINER AND SEAL BATTERY CONTAINER | —S7 |

FIG. 4

EP 2 555 282 A1

FIG. 5

FIG. 6

FIG. 7

CONVEYING DIRECTION

FIG. 8

FIG. 9

FIG. 10

FIG. 11

| INTERNATIONAL SEARCH REPORT | International application No. |
|---|---|
| | PCT/JP2011/057193 |

**A. CLASSIFICATION OF SUBJECT MATTER**
*H01M4/04*(2006.01)i, *B26D7/01*(2006.01)i, *B26F1/40*(2006.01)i, *H01M4/139* (2010.01)i

According to International Patent Classification (IPC) or to both national classification and IPC

**B. FIELDS SEARCHED**

Minimum documentation searched (classification system followed by classification symbols)
H01M4/04, B26D7/01, B26F1/40, H01M4/139

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-317709 A  (Mitsubishi Cable Industries, Ltd.),<br>07 November 2003 (07.11.2003),<br>claims; paragraphs [0017] to [0040]; fig. 3<br>(Family: none) | 1<br>2-4 |
| Y<br>A | JP 8-264176 A  (The Furukawa Electric Co., Ltd., The Furukawa Battery Co., Ltd.),<br>11 October 1996 (11.10.1996),<br>claims; paragraphs [0011] to [0017]; fig. 3<br>(Family: none) | 1<br>2-4 |
| A | JP 2003-25136 A  (Sony Corp.),<br>29 January 2003 (29.01.2003),<br>claims; paragraphs [0010] to [0027]<br>(Family: none) | 1-4 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 May, 2011 (27.05.11) | Date of mailing of the international search report<br>07 June, 2011 (07.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010073168 A
- JP 2003317709 A